# EUROPÄISCHE PATENTANMELDUNG

(11) **EP 0 769 710 A2**
(43) Veröffentlichungstag der Anmeldung: **23.04.1997**
(21) Anmeldenummer: 96115997.7
(22) Anmeldetag: 05.10.1996
(51) Int. Cl.: G02B 6/38, G02B 6/42

(54) **Optische Verbinderanordnung**

(30) Priorität: 20.10.1995 DE 19539175
(71) Anmelder: THE WHITAKER CORPORATION, Wilmington, Delaware 19808 (US)
(72) Erfinder: Vergeest, Henricus Jozef, 5213 XH Den Bosch (NL)
(74) Vertreter: Heinz-Schäfer, Marion

(57) **Zusammenfassung**

Es wird eine optische Verbinderanordnung zur Verbindung eines ersten Lichtleitfaserendes mit einem zweiten Lichtleitfaser-ende oder mit einer optischen Sende- oder Empfangsanordnung beschrieben, die eine zylinderförmige Buchse (1) mit einem Längsschlitz (2) in die eine zylinderförmige Hülse, in der das Lichtleitfaserende gefasst ist, von zumindest einer Stirnseite einbringbar ist, aufweist. Die zylinderförmige Buchse (1) ist in einer Öffnung (4) eines Halteelementes (3) angeordnet und das Halteelement (3) weist in der Öffnung einen Längsgrat (5) auf, der in den Längsschlitz (2) der Buchse (1) eingreift.

Es wird eine reproduzierbare optische Verbinderanordnung angegeben, mit der eine minimale Dämpfung erreichbar ist.

## Beschreibung

Die Erfindung betrifft eine optische Verbinderanordnung zur Verbindung eines ersten Lichtleitfaserendes mit einem zweiten Lichtleitfaserende oder mit einer Sende- oder Empfangs-anordnung, insbesondere einem optischen Sende- oder Empfangselement, mit einer zylinderförmigen Buchse mit einem Längsschlitz, in die eine zylinderförmige Hülse, in der das Lichtleitfaserende gefasst ist, von zumindest einer Stirnseite einbringbar ist, wobei die zylinderförmige Buchse in einer Öffnung eines Haltelementes angeordnet ist.

Aus der US 5,000,537 ist eine zylinderförmige Buchse für einen optischen Stecker bekannt, die über die gesamte Länge geschlitzt ist. In die Buchse kann von jeder Stirnseite eine Hülse eingeschoben werden, wobei in jeder Hülse ein Licht-leitfaserende gefasst ist. Die im Querschnitt C-förmige Buchse ist aus einem elastischen Material hergestellt und hält die Hülsen mittels elastischer Kräfte.

Aus der US 5,179,608 ist ebenfalls eine zylinderförmige Buchse mit einem Längsschlitz bekannt zur Aufnahme eines Paares von koaxial aneinanderstossenden Hülsen, in die optische Lichtleitfaserenden eingefügt sind. Wie Dämpfungsmessungsversuche gezeigt haben, hängt die Dämpfung auch ab von der Lage des Längsschlitzes zu einer eventuell vorliegenden Exzentrizität des Faserkernes oder des äusseren Durchmessers der Hülse. Da die Gestalt der Buchse nicht rotationssymmetrisch ist, spielt es eine Rolle an welcher Stelle sich der Schlitz der Buchse befindet. Um eine reproduzierbare Lage der Buchse zu erreichen, wird daher an der Buchse ein Längsgrat vorgesehen und im Buchsenhalter eine zylindrische Öffnung mit einer Nut. Dadurch wird die Buchse in Bezug auf rotierende Bewegungen festgelegt. In axialer Richtung ist die Buchse weiterhin beweglich.

Es ist Aufgabe der Erfindung einen optischen Verbinder anzugeben, mit dem eine reproduzierbare Verbindung mit minimaler Dämpfung erreichbar ist und der einfach herzustellen ist.

Die Aufgabe wird durch eine optische Verbinderanordnung mit den Merkmalen des Patentanspruches 1 oder 2 gelöst. Vorteilhafte Weiterbildungen sind in den Unteransprüchen angegeben.

Wie aus obigen Veröffentlichungen bekannt, werden zylinderförmige Buchsen mit einem Längsschlitz zur Justierung
und Fixierung von zwei Lichtleitfaserenden aufeinander, aber auch zur Justierung und Fixierung eines einzelnen Lichtleitfaserendes an ein optoelektronisches Sende- oder Empfangselement eingesetzt. Standard-Buchsen sind heute aus Keramik hergestellt, um den hohen Anforderungen gerecht zu werden. Dabei ist es sehr wichtig, dass der Innenradius sehr genau eingehalten wird. Die Herstellung solcher Buchsen ist äusserst schwierig und die Änderung des Designs führt zu einer Kostenerhöhung und erneuten Herstellungsproblemen.

Gemäss der Erfindung wird der Längsschlitz in der Buchse zur Festlegung der Buchse gegen Rotationen ausgenutzt. Um eine reproduzierbare Lage der Buchse zu erreichen, wird im Halteelement oder Buchsenhalter ein Längsgrat oder zumindest zwei auf einer zur Längsachse der eingefügten Buchse parallelen Linie liegende Noppen vorgesehen, der, beziehungsweise die in den Längsschlitz der Buchse eingreifen. Das Halteelement weist eine Öffnung auf, in die die Buchse einfügbar ist. Diese Öffnung kann beispielsweise ebenfalls zylindrisch sein. Es ist aber auch eine andere Form möglich, die eine Führung der Buchse derart, dass der Längsgrat beziehungsweise die Noppen in den Längsschlitz eingreifen, gewährleistet.

Das Halteelement kann beispielsweise als Kunststoffspritzgussteil hergestellt werden. Es kann dazu dienen, die Buchse an weiteren Teilen zu fixieren, oder mehrere Buchsen nebeneinander anzuordnen oder beispielsweise eine Halterung für ein optoelektronisches Sende- oder Empfangselement aufweisen.

Das neue Halteelement kann also mit Standard-Buchsen eingesetzt werden. Die Veränderung befindet sich nicht am Präzisionsteil, nämlich der Buchse, sondern an einem Teil mit geringeren Genauigkeitsanforderungen, dem Buchsenhalter.

Ein Ausführungsbeispiel der Erfindung wird anhand der Zeichnungen erläutert. Es zeigen:
Figur 1 eine schematische Darstellung der zylinderförmigen Buchse, und
Figur 2 einen Schnitt durch die zylinderförmige Buchse im Halteelement.

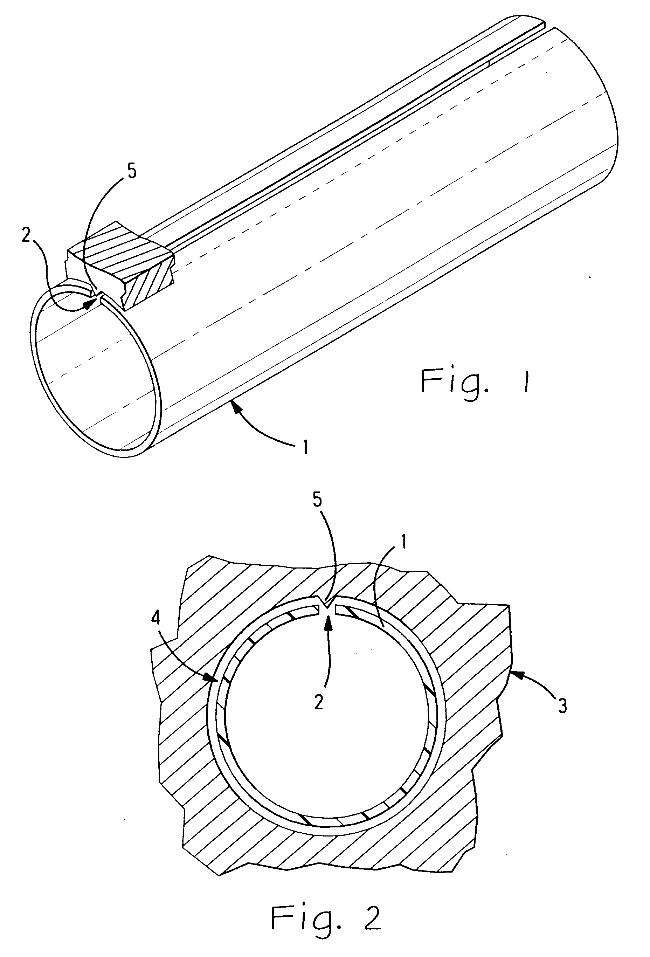

In Figur 1 ist die zylinderförmige Buchse 1 schematisch dargestellt. Sie weist einen Längsschlitz 2 auf. Sie dient zur Halterung von in Hülsen gefassten Lichtleitfaserenden und ist oftmals aus Keramik hergestellt. Die Halterung der Hülsen erfolgt durch elastische Kräfte.

Figur 2 zeigt einen Schnitt durch ein Halteelement 3, das eine zylindrische Öffnung 4 und einen darin befindlichen Längsgrat 5 aufweist. Die eingeschobene Buchse 1 ist gegen Drehungen festgelegt, da der Längsgrat 5 in den Längsschlitz 2 eingreift. Dieses Eingreifen ist auch in Figur 1 durch ein schraffiertes Teil angedeutet.

## Patentansprüche

1. Optische Verbinderanordnung zur Verbindung eines ersten Lichtleitfaserendes mit einem zweiten Lichtleitfaserende oder mit einer Sende- oder Empfangsanordnung, insbesondere einem optoelektronischen Sende- oder Empfangselement, mit einer zylinderförmigen Buchse mit einem Längsschlitz in die eine zylinderförmige Hülse, in der das Lichtleitfaserende gefasst ist, von zumindest einer Stirnseite einbringbar ist, wobei die zylinderförmige Buchse (1) in einer Öffnung (4) eines Halteelementes (3) angeordnet ist, dadurch gekennzeichnet, dass das Halteelement (3) einen Längsgrat (5) aufweist, der in den Längsschlitz (2) der Buchse (1) eingreift.

2. Optische Verbinderanordnung zur Verbindung eines ersten Lichtleitfaserendes mit einem zweiten Lichtleitfaserende oder mit einer Sende- oder Empfangsanordnung, insbesondere einem optoelektronischen Sende- oder Empfangselement, mit einer zylinderförmigen Buchse mit einem Längsschlitz in die eine zylinderförmige Hülse, in der das Lichtleitfaserende gefasst ist, von zumindest einer Stirnseite einbringbar ist, wobei die zylinderförmige Buchse (1) in einer Öffnung (4) eines Halteelementes (3) angeordnet ist, dadurch gekennzeichnet, dass das Halteelement zumindest zwei auf einer zur Längsachse der eingefügten Buchse parallelen Linie liegende Noppen aufweist, die in den Längsschlitz (2) der Buchse (1) eingreifen.

3. Optische Verbinderanordnung nach einem der Ansprüche 1 oder 2, dadurch gekennzeichnet, dass die Buchse (1) aus Keramik ist.

4. Optische Verbinderanordnung nach einem der Patentansprüche 1, 2 oder 3, dadurch gekennzeichnet, dass die Öffnung (4) im Halteelement (3) im wesentlichen zylindrisch ist.

5. Optische Verbinderanordnung nach einem der Patentansprüche 1 bis 4, dadurch gekennzeichnet, dass das Halteelement (3) eine Halterung für ein optoelektronisches Sende- oder Empfangselement aufweist.

6. Optische Verbinderanordnung nach einem der Ansprüche 1 bis 5, dadurch gekennzeichnet, dass das Halteelement (3) ein Kunststoffspritzgussteil ist.
